# EUROPEAN PATENT APPLICATION

(11) **EP 2 886 850 A1**
(43) Date of publication of application: **24.06.2015**
(21) Application number: 13306851.0
(22) Date of filing: 23.12.2013
(51) Int. Cl.: F02N 15/02, F16D 41/063

(54) **Torque transmission mechanism for an internal combustion engine**

(71) Applicant: Aktiebolaget SKF, 41 550 Göteborg (SE)
(72) Inventor: Chambonneau, Charles, 37300 JOUE LES TOURS (FR); Berruet, Nicolas, 37260 Artannes sur Indre (FR); Champalou, François, 41150 CHAUMONT SUR LOIRE (FR); Ribault, Patrice, 37210 VOUVRAY (FR); Liverato, Yves-André, 37370 St PATERNE RACAN (FR); Corbett, Richard, 37230 FONDETTES (FR)
(74) Representative: Myon, Gérard Jean-Pierre

(57) **Abstract**

This torque transmission mechanism (A) for an internal combustion engine is adapted to transmit a starting torque from a starter motor to a crankshaft (4) of the internal combustion engine and comprises a ring gear (2) that transmits the starting torque and a one-way clutch (8) disposed between the ring gear (2) and the crankshaft (4). Rotation of the ring gear (2) with respect to the crankshaft (4) is allowed by a sliding contact between at least two surfaces (60, 820, 62, 122).

## Description

The invention relates to a torque transmission mechanism for an internal combustion engine.

Torque transmission mechanisms for starter motors of internal combustion engines generally comprise a ring gear to which a starting torque is transmitted by a starter motor, and which transmits a torque to a one-way clutch of the torque transmission mechanism. The one-way clutch comprises an inner ring which is coupled in rotation to the ring gear, and an outer ring which is coupled in rotation to a crankshaft of the internal combustion engine. Relative rotation of the inner ring of the one-way clutch and of the ring gear with respect to the crankshaft is generally permitted by one or more rolling bearings.

Such an arrangement is not entirely satisfying, because the rolling bearing is submitted to a relatively low radial load, for example approximately 20 Newton. When the radial load is at a too low level, the rolling elements of the rolling bearing can begin to slide with respect to the raceway tracks of the outer ring and the outer ring. Such a sliding may damage surfaces of the raceway tracks and the rolling elements and therefore reduce the service life of the rolling bearing.

The aim of the invention is to provide a new torque transmission mechanism, in which the rotation of the ring gear with respect to the crankshaft is allowed by more reliable means than in the prior art.

To this end, the invention concerns a torque transmission mechanism for an internal combustion engine, adapted to transmit a starting torque from a starter motor to a crankshaft of the internal combustion engine, the torque transmission mechanism comprising a ring gear that transmits the starting torque and a one-way clutch disposed between the ring gear and the crankshaft. This torque transmission is characterized in that rotation of the ring gear with respect to the crankshaft is allowed by a sliding contact between at least two surfaces.

Thanks to the invention, there are no problems of sliding between the surfaces which rotate relative to each and the service life of the torque transmission mechanism is extended.

According to further aspects of the invention which are advantageous but not compulsory, such a torque transmission mechanism may incorporate one or several of the following features:
- The torque transmission mechanism comprises at least one bushing radially mounted between the crankshaft and the inner ring of the one-way clutch, whereas the sliding contact take place between at least one cylindrical surface of said bushing and a surface coupled in rotation with the inner ring of the crankshaft.
- The torque transmission mechanism comprises a thrust bushing which allows relative rotation between the bushing and a front plate which joins the crankshaft and the outer ring.
- The torque transmission mechanism comprises a thrust washer for axially retaining the bushing with respect to the torque transmission mechanism.
- The inner ring and the bushing are integrally formed.
- The torque transmission mechanism comprises two bushings radially mounted between the inner ring and the crankshaft.
- One of the bushings comprises a radially outwardly extending collar.
- The crankshaft is inserted in a sleeve which is fixed to a front plate integral in rotation with the outer ring of the one-way clutch.
- The ring gear is in one piece with the inner ring of the one-way-clutch.
- The surfaces which are in sliding contact are covered by an anti-wear coating.
- The anti-wear coating comprises diamond-like carbon or tungsten disulphide.

The invention will now be explained in correspondence with the annexed figures, as an illustrative example. In the annexed figures:
- figure 1 is a sectional view of an upper half of a torque transmission mechanism according to a first embodiment of the invention;
- figure 2 is a view, at a larger scale, of detail 11 on figure 1;
- figures 3 to 6 are views similar to figure 2, of a torque transmission mechanism according to a second, a third, a fourth and a fifth embodiments of the invention.

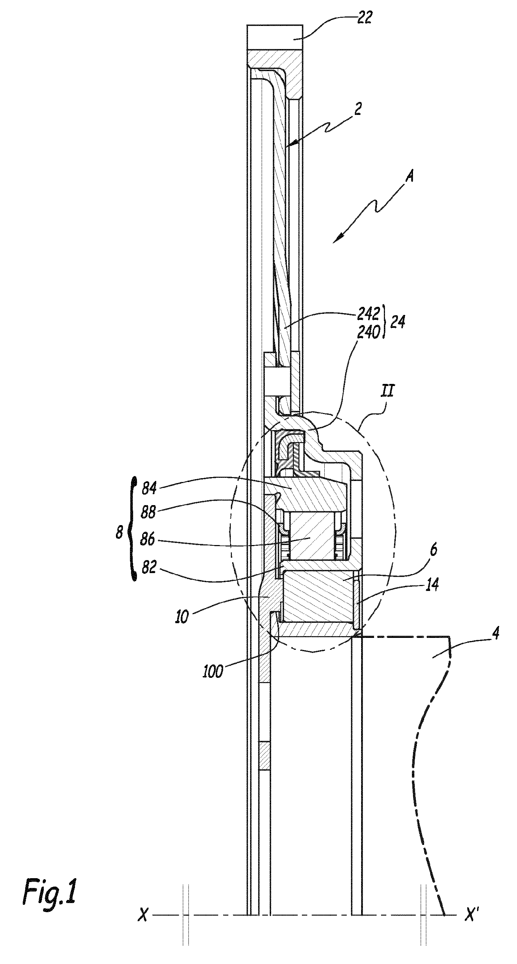

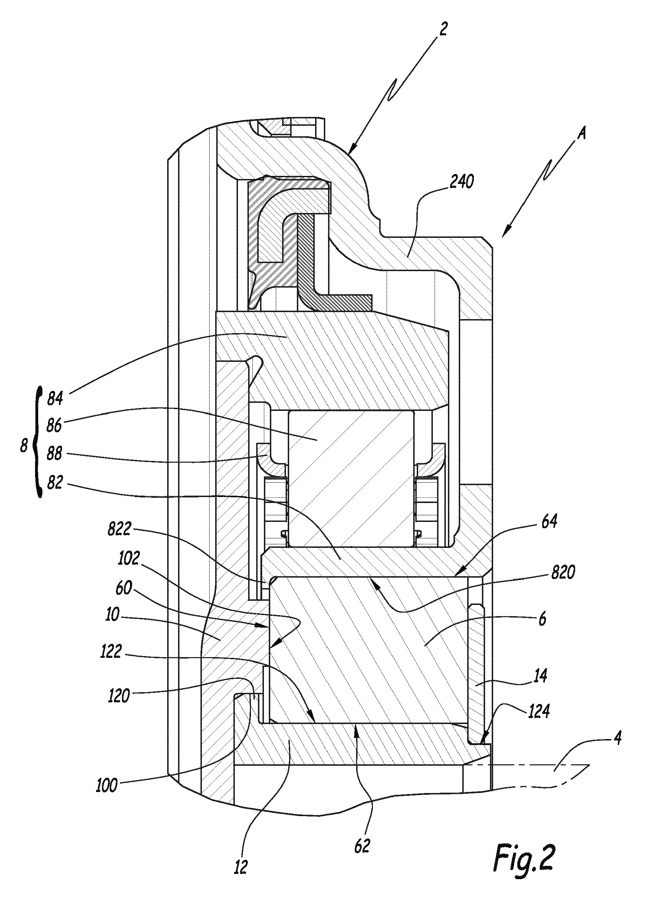

The torque transmission mechanism A represented on figures 1 and 2 comprises a ring gear 2 which is driven by a non-shown pinion of a non-shown starter motor. Ring gear 2 is rotatable with respect to a crankshaft 4 of a non-shown internal combustion engine, along a rotation axis X-X' of torque transmission mechanism A. For the sake of simplicity and clarity, crankshaft 4 is shown in dashed lines.

In this description, the terms « axial », « radial », « axially », « radially » refer to axis X-X'. A direction is axial when it is parallel to axis X-X', and radial when it is perpendicular to axis X-X' and secant with this axis. A surface is axial when it is perpendicular to axis X-X', and radial when this surface belongs to a cylinder that surrounds axis X-X' at a constant radial distance.

Torque transmission mechanism A also comprises a one-way clutch 8, which includes an inner ring 82 formed by a portion of ring gear 2, an outer ring 84 and sprags 86 mounted in a cage 88 located between inner ring 82 and outer ring 84.

Outer ring 84 is coupled in rotation with crankshaft 4 thanks to a front plate 10. According to a non-shown variant, front plate 10 and outer ring 84 may be formed by a single part.

Crankshaft 4 is coupled in rotation to front plate 10 and is inserted in a sleeve 12, comprising a collar 120, which is press fitted against a shoulder 100 of front plate 10.

Ring gear 2 comprises a gear side portion 22, to which a starting torque is transmitted from the starter motor via gear mesh. Ring gear 2 also includes a flange 24 which extends between gear side portion 22 and inner ring 82. Flange 24 comprises an inner section 240 and an outer section 242. Inner ring 82 is formed by a portion of inner section 240.

Relative rotation between crank shaft 4 and inner ring 82 occurs when crankshaft 4 is driven by the internal combustion engine while ring gear 2 is idle due to the switching of the starter motor. Such a rotation is permitted by at least one bushing 6 mounted radially between inner ring 82 and sleeve 12. Bushing 6 comprises an inner surface 62 which is mounted against an inner surface 820 of inner ring 82 so as to permit a relative sliding between inner ring 82 and bushing 6.

In the same way, an inner surface 62 of bushing 6 is mounted against an outer surface 122 of sleeve 12 so as to permit a relative sliding mounting between sleeve 12, and crank shaft 4, and bushing 6.

Relative rotation between ring gear 2 and crank shaft 4 is thus permitted by a relative sliding mounting between two cylindrical surfaces. Such an arrangement avoids the drawbacks of using rolling bearings in a mechanism in which the radial loads are relatively low, as it is the case for torque transmission mechanism A.

There are actually two sliding cylindrical interfaces, respectively between bushing 6 and sleeve 12, and between bushing 6 and inner ring 82. However, only one of these two interfaces is critical for allowing relative rotation between sleeve 12 and inner ring 82.

Bushing 6 may be mounted non-rotatable with either sleeve 12 or inner ring 82.

Bushing 6 is preferably made of a metallic material.

In order to prevent wear on inner surface 820, outer surface 122, inner surface 62 and outer surface 64, these surfaces are covered by an anti-wear coating which may comprise materials such as diamond-like carbon or tungsten disulphide.

In order to prevent bushing 6 from sliding axially away from torque transmission mechanism A, a thrust washer 14 is mounted against a shoulder 124 of sleeve 12. Shoulder 124 is formed on outer surface 122. Washer 14 blocks in translation bushing 6 along axis X-X', on the side of bushing 6 opposed to front plate 10. Thrust washer 14 may be press fitted against shoulder 124.

On the other side of bushing 6 with respect to thrust washer 14, a lateral surface 60 of bushing 6 is in sliding contact with an axial surface 102 of front plate 10.

Bushing 6 is prevented from sliding axially with respect to inner ring 82 by an inwardly extending collar 822 of inner ring 82. Collar 822 abuts against bushing 6 so that inner ring 82 cannot move in translation along axis X-X' with respect to bushing 6 away from front plate 10.

A second, a third, a fourth and a fifth embodiment of the invention are represented on figures 2 to 6. In these embodiments, elements similar to the first embodiment have the same references and work in the same way. Only the differences from the first embodiment are detailed here-after.

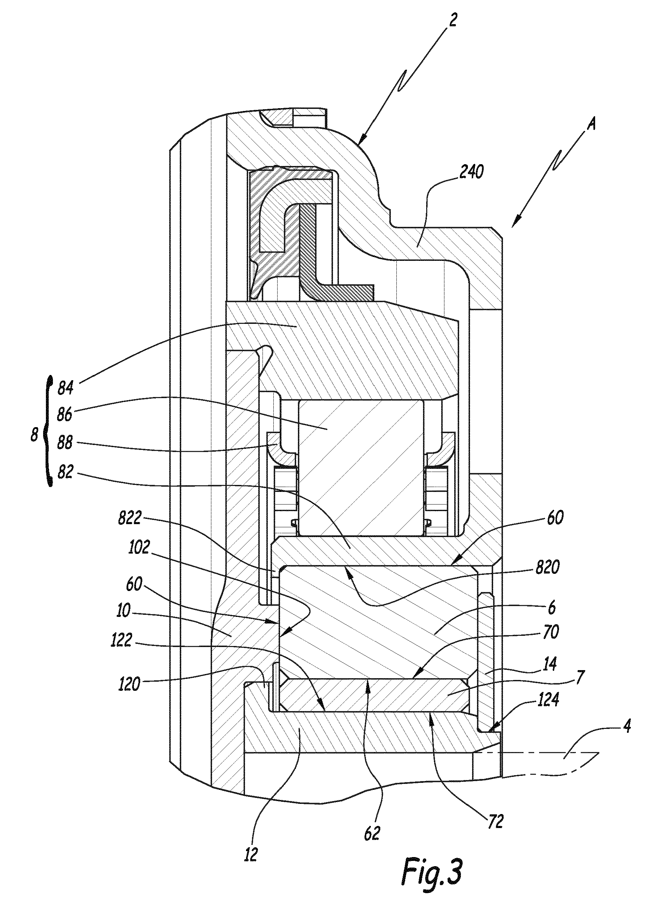

In the embodiment of figure 3, torque transmission mechanism A comprises a second bushing 7 which is inserted radially between sleeve 12 and bushing 6. Second bushing 7 comprises an outer cylindrical surface 70 which is in sliding contact with inner surface 62, and an inner cylindrical surface 72 which is in sliding contact with outer surface 122.

In a non-shown variant, second bushing 7 may be mounted between bushing 6 and inner ring 82 instead of being mounted between bushing 6 and sleeve 12.

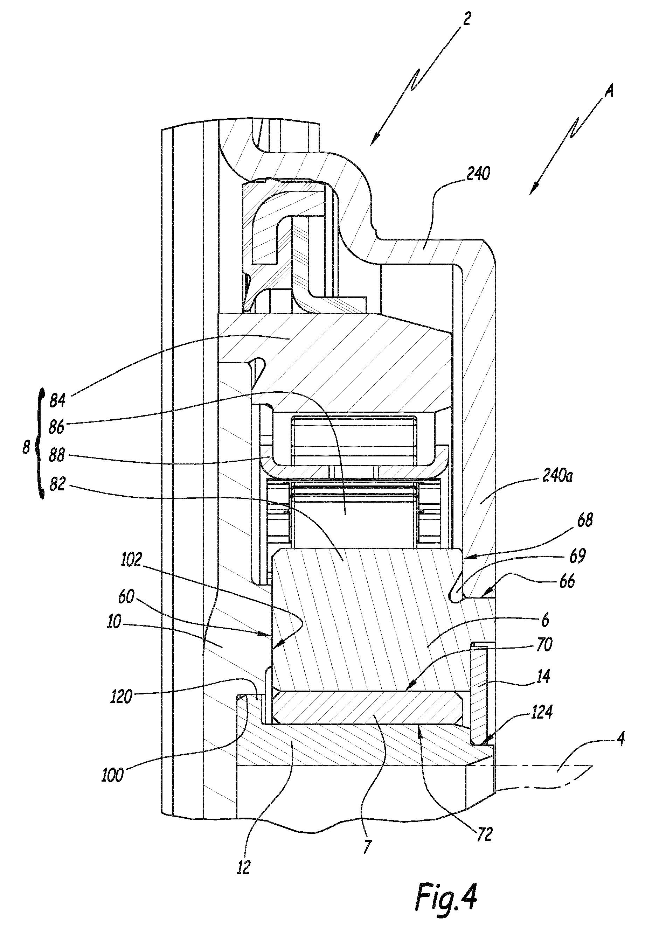

In the embodiment of figure 4, bushing 6 is integrally formed with inner ring 82. In such a case, outer surface 64 is in contact with sprags 86. Inner section 240 comprises a radial portion 240a which is fixed to bushing 6. Bushing 6 therefore comprises a radial surface 66 and an axial surface 68 on which portion 240a is mounted. Between surfaces 66 and 68, bushing 6 comprises a recess 69 which permits proper welding of inner section 240 on bushing 6.

In a variant, inner section 240 and bushing 6 may be fixed to each other by other fastening means than welding.

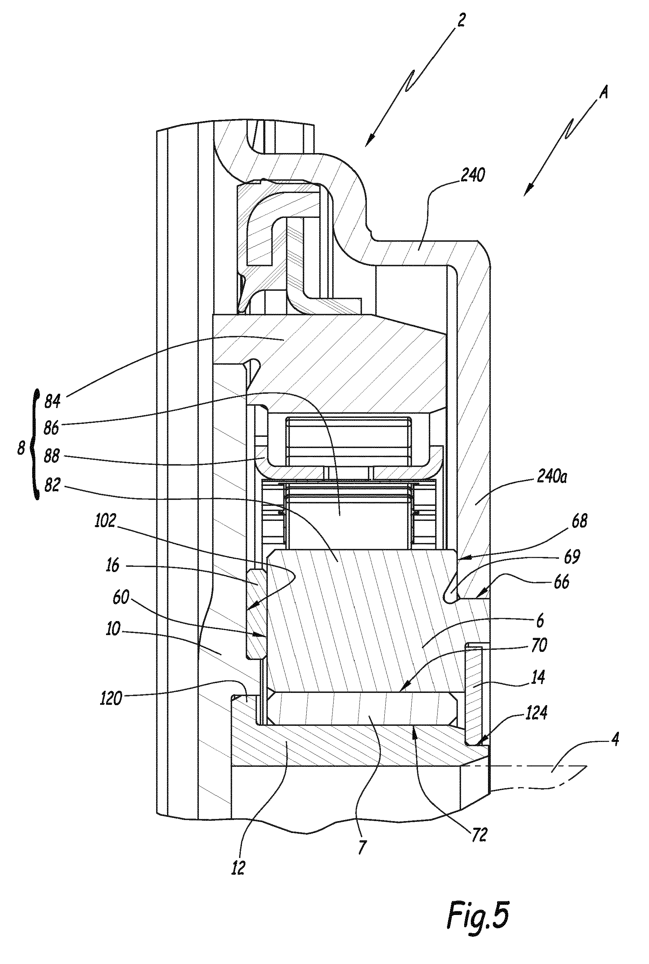

In the embodiment of figure 5, bushing 6 is not in direct sliding contact with front plate 10. In such a case, torque transmission mechanism A comprises a thrust bushing 16 which is axially inserted between axial surface 102 and lateral surface 60.

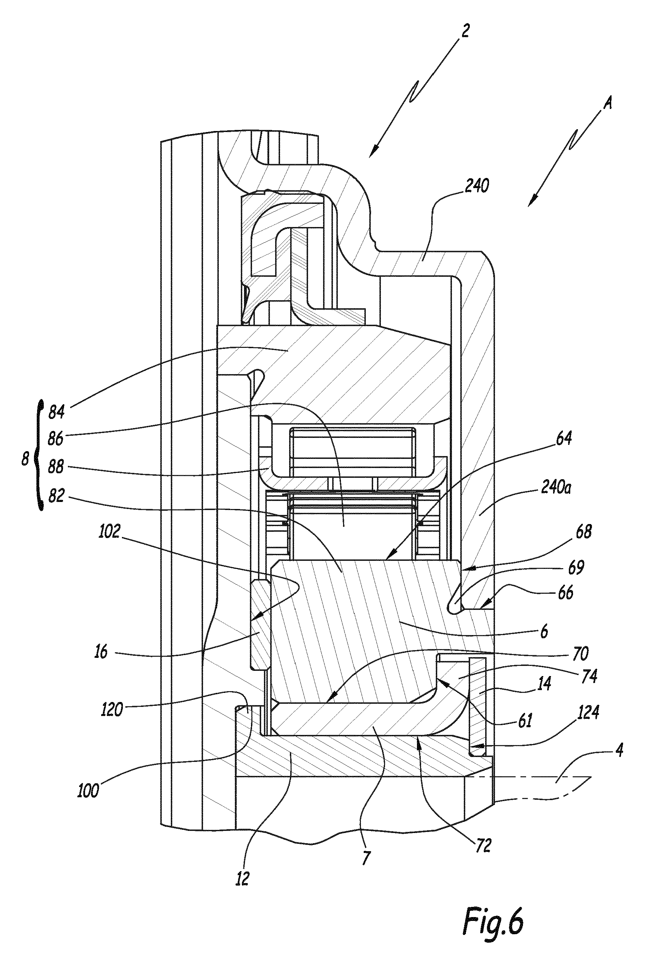

In the embodiment of figure 6, the second bushing 7 comprises a radially outwardly extending collar 74, which is axially inserted between an axial surface 61 of bushing 6 and thrust washer 14.

According to a non-shown embodiment of the invention, bushing 6 may be made of composite or synthetic material.

According to a non-shown embodiment of the invention, bushing 6 may comprise a core made of a metallic material covered by composite or synthetic material.

The features of the previously described embodiments and variants can be combined to from new embodiments of the invention.

## Claims

1. Torque transmission mechanism (A) for an internal combustion engine, adapted to transmit a starting torque from a starter motor to a crankshaft (4) of the internal combustion engine, the torque transmission (A) mechanism comprising a ring gear (2) that transmits the starting torque and a one-way clutch (8) disposed between the ring gear (2) and the crankshaft (4), wherein rotation of the ring gear (2) with respect to the crankshaft (4) is allowed by a sliding contact between at least two surfaces (60, 820, 62, 122).

2. Torque transmission mechanism according to claim 1, wherein it comprises at least one bushing (6, 7) radially mounted between the crankshaft (4) and the inner ring (82) of the one-way clutch (8), and wherein the sliding contact take place between at least one cylindrical surface (62, 64) of said bushing (6) and a surface (122, 820) coupled in rotation with the inner ring (82) of the crankshaft (122).

3. Torque transmission mechanism according to claim 2, wherein it comprises a thrust bushing (16) which allows relative rotation between the bushing (6) and a front plate (10) which joins the crankshaft (4) and the outer ring (82).

4. Torque transmission mechanism according to any of claims 2 and 3, wherein it comprises a thrust washer (14) for axially retaining the bushing (6) with respect to the torque transmission mechanism (A).

5. Torque transmission mechanism according to any of claims 2 to 4, wherein the inner ring (82) and the bushing (6) are integrally formed.

6. Torque transmission mechanism according to any preceding claim , wherein it comprises two bushings (6, 7) radially mounted between the inner ring (82) and the crankshaft (4).

7. Torque transmission mechanism according to claim 6, wherein one (7) of the bushings (6, 7) comprises a radially outwardly extending collar (74).

8. Torque transmission mechanism according to any preceding claim, wherein the crankshaft (4) is inserted in a sleeve (12) which is fixed to a front plate (10) integral in rotation with the outer ring (84) of the one-way clutch (8).

9. Torque transmission mechanism according to any preceding claim 1, wherein the ring gear (2) is in one piece with the inner ring (82) of the one-way-clutch (8).

10. Torque transmission mechanism according to any preceding claim, wherein the surfaces (60, 820, 62, 122) which are in sliding contact are covered by an anti-wear coating.

11. Torque transmission mechanism according to claim 1, wherein the anti-wear coating comprises diamond-like carbon or tungsten disulphide.
